# EUROPEAN PATENT APPLICATION

(11) **EP 4 442 746 A1**
(43) Date of publication of application: **09.10.2024**
(21) Application number: 23166900.3
(22) Date of filing: 06.04.2023
(51) Int. Cl.: C08K 5/01, C09J 163/00

(54) **EPOXY RESIN COMPOSITIONS SUITABLE FOR BONDING TO OILY SURFACE**

(71) Applicant: 3M Innovative Properties Company, Saint Paul, MN 55133-3427 (US)
(72) Inventor: Heering, Christian, 41453 Neuss (DE); Ludewig, Olaf, 41453 Neuss (DE)
(74) Representative: Mathys & Squire

(57) **Abstract**

A method of using an epoxy resin composition is described comprising providing a substrate comprising a first hydrocarbon on a surface of the substrate; providing an epoxy resin composition on the surface of the substrate; and curing the epoxy resin composition. The epoxy resin composition comprises i) an epoxy resin; ii) an epoxy resin curative; and iii) a second hydrocarbon. The first and second hydrocarbons are typically a liquid or semi-solid. Suitable hydrocarbons include (e.g. anticorrosion) oil, petrolatum, and polybutene. Also described are one and two-part compositions comprising an epoxy resin; an epoxy resin curative; and a hydrocarbon as described herein.

## Description

### Summary

In one embodiment, a method of using an epoxy resin composition is described comprising: providing a substrate comprising a first hydrocarbon on a surface of the substrate; providing an epoxy resin composition on the surface of the substrate; and curing the epoxy resin composition. The epoxy resin composition comprises i) an epoxy resin; ii) an epoxy resin curative; and iii) a second hydrocarbon.

The first and second hydrocarbons are typically a liquid or semi-solid. Suitable hydrocarbons include (e.g. anti-corrosion) oil, petrolatum, and polybutene. In some embodiments, the amount of second hydrocarbon is no greater than 10, 5, or 1 wt.% of the total organic components of the unfilled epoxy resin composition.

In some embodiments, the method further comprises contacting the composition with a second substrate that comprises the same material or a different material than the first substrate.

In some embodiments, the composition is an adhesive having an overlap shear and/ or T-peel greater than the same composition without the second hydrocarbon.

Also described in an adhesive bonded article comprising a first and (i.e. same or different) second substrate bonded with the epoxy resin composition comprising a second hydrocarbon as described herein.

Also described is a method of improving the overlap shear and/or T peel adhesion and/or wedge impact peel (WIP) adhesion of an epoxy resin composition to an (e.g. oily) surface comprising a first hydrocarbon. The method comprising combining an epoxy resin composition with a second hydrocarbon in an amount no greater than 10 wt.%, based on the total organic components of the unfilled epoxy resin composition.

Also described are one and two-part compositions comprising an epoxy resin; an epoxy resin curative; and a hydrocarbon as described herein. When the composition comprises an epoxy resin in a first part and an epoxy resin curative in a second part, the second hydrocarbon is present in the first part, the second part, or both parts.

### Detailed Description

### Epoxy Resin

The epoxy resins or epoxides that are useful in the methods and composition may be any organic compound having at least one oxirane ring that is polymerizable by ring opening, i.e., an average epoxy functionality greater than one, and preferably at least two. The epoxides can be monomeric or polymeric, and aliphatic, cycloaliphatic, heterocyclic, aromatic, hydrogenated, or mixtures thereof. Preferred epoxides contain more than 1.5 epoxy group per molecule and preferably at least 2 epoxy groups per molecule. The useful materials typically have a weight average molecular weight of about 150 to about 10,000, and more typically of about 180 to about 1,000. The molecular weight of the epoxy resin is usually selected to provide the desired properties of the cured composition. Suitable epoxy resins include linear polymeric epoxides having terminal epoxy groups (e.g., a diglycidyl ether of a polyoxyalkylene glycol), polymeric epoxides having skeletal epoxy groups (e.g., polybutadiene poly epoxy), and polymeric epoxides having pendent epoxy groups (e.g., a glycidyl methacrylate polymer or copolymer), and mixtures thereof. The epoxide-containing materials include compounds having the general formula: 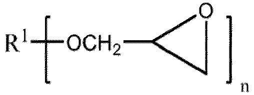 where R1 is an alkyl, alkyl ether, or aryl, and n is 1 to 6.

These epoxy resins include aromatic glycidyl ethers, e.g., such as those prepared by reacting a polyhydric phenol with an excess of epichlorohydrin, cycloaliphatic glycidyl ethers, hydrogenated glycidyl ethers, and mixtures thereof. Such polyhydric phenols may include resorcinol, catechol, hydroquinone, and the polynuclear phenols such as p,p'-dihydroxydibenzyl, p,p'-dihydroxydiphenyl, p,p'- dihydroxyphenyl sulfone, p,p'-dihydroxybenzophenone, 2,2'-dihydroxy- 1, 1 -dinaphthylmethane, and the 2,2', 2,3', 2,4', 3,3', 3,4', and 4,4' isomers of dihydroxydiphenylmethane, dihydroxydiphenyldimethylmethane, dihydroxydiphenylethylmethylmethane, dihydroxydiphenylmethylpropylmethane, dihydroxydiphenylethylphenylmethane, dihydroxydiphenylpropylphenylmethane, dihydroxydiphenylbutylphenylmethane, dihydroxydiphenyltolylethane, dihydroxydiphenyltolylmethylmethane, dihydroxydiphenyldicyclohexylmethane, and dihydroxy diphenylcyclohexane.

Also useful are polyhydric phenolic formaldehyde condensation products as well as polyglycidyl ethers that contain as reactive groups only epoxy groups or hydroxy groups. Useful curable epoxy resins are also described in various publications including, for example, "Handbook of Epoxy Resins" by Lee and Nevill, McGraw-Hill Book Co., New York (1967), and Encyclopedia of Polymer Science and Technology, 6, p.322 (1986).

The choice of the epoxy resin used depends upon the end use for which it is intended. Epoxides with flexibilized backbones may be desired where a greater amount of ductility is needed in the bond line. In some embodiments, the composition is suitable for use as a structural adhesive. Materials such as diglycidyl ethers of bisphenol A and diglycidyl ethers of bisphenol F can provide desirable structural adhesive properties that these materials attain upon curing, while hydrogenated versions of these epoxies may be useful for compatibility with substrates having oily surfaces.

Examples of commercially available epoxides useful in the present disclosure include diglycidyl ethers of bisphenol A (e.g, those available under the trade designations EPON 828, EPON 1001, EPON 1004, EPON 2004, EPON 1510, and EPON 1310 from Momentive Specialty Chemicals, Inc., and those under the trade designations D.E.R. 331, D.E.R. 332, D.E.R. 334, and D.E.N. 439 available from Dow Chemical Co.); diglycidyl ethers of bisphenol F (e.g., that are available under the trade designation ARALDITE GY 281 available from Huntsman Corporation); silicone resins containing diglycidyl epoxy functionality; flame retardant epoxy resins (e.g., that are available under the trade designation DER 560, a brominated bisphenol type epoxy resin available from Dow Chemical Co.); and 1,4-butanediol diglycidyl ethers.

Epoxy-containing compounds having at least one glycidyl ether terminal portion, and preferably, a saturated or unsaturated cyclic backbone may optionally be added to the composition as reactive diluents. Reactive diluents may be added for various purposes such as to aid in processing, e.g., to control the viscosity in the composition as well as during curing, to flexibilize the cured composition, and to compatibilize materials in the composition.

Examples of such diluents include: diglycidyl ether of cyclohexanedimethanol, diglycidyl ether of resorcinol, p-tert-butyl phenyl glycidyl ether, cresyl glycidyl ether, diglycidyl ether of neopentyl glycol, triglycidyl ether of trimethylolethane, triglycidyl ether of trimethylolpropane, triglycidyl p-amino phenol, N,N'-diglycidylaniline, N,N,N'N'-tetraglycidyl meta- xylylene diamine, and vegetable oil polyglycidyl ether. Reactive diluents are commercially available under the trade designation HELOXY 107 and CARDURA N10 from Momentive Specialty Chemicals, Inc. The composition may contain a toughening agent to aid in providing the desired overlap shear, peel resistance, and impact strength.

The (e.g. adhesive) composition desirably contains one or more epoxy resins having an epoxy equivalent weight of at least 100, 200 or 300 and typically no greater than 1500, 1200, or 1000. In some embodiments, the adhesive contains two or more epoxy resins, wherein at least one epoxy resin has an epoxy equivalent weight of from about 300 to about 500, and at least one epoxy resin has an epoxy equivalent weight of from about 1000 to about 1200.

In some embodiments, the (e.g. structural) adhesive composition comprises one or more epoxy resins in an amount of at least 20, 25, or 30 wt.% and typically no greater than 95, 90, 85, 80, 75, or 70 wt.% of the unfilled (e.g. adhesive) composition or in other words the total amount of organic components except for inorganic components and organic polymeric fillers (e.g. particulate toughening agents).

### Hydrocarbon

In order to improve the adhesion and/or overlap shear of an adhesive composition to a substrate comprising an oily/greasy surface, a hydrocarbon is combined with the epoxy resin. The hydrocarbon of the oily surface will be described herein as the first hydrocarbon. The hydrocarbon that is combined with the epoxy resin will be described herein as the second hydrocarbon. The first and second hydrocarbon may be the same hydrocarbon materials or different hydrocarbon materials.

A hydrocarbon typically consisting (e.g. entirely) of hydrogen and carbon. The four classes of hydrocarbons include alkane, alkenes, alkynes and aromatic. The structure of hydrocarbons can be linear, branched, or cyclic. The first and second hydrocarbons are a liquid or semi-solid materials.

In some embodiments, the first and/or second hydrocarbons may be characterized as an oil. Oils typically have a (number, weight, or viscosity) average molecular weight of 500-1500 g/mole. In some embodiments, the hydrocarbon oil has a number average molecular weight of at least 650, 700, 750, 800, or 850 g/mole. The number average molecular weight is typically no greater than 1500, 1400, 1300, 1200, or 1000 g/mole.

In some embodiments, the oil can be an aliphatic hydrocarbon, such as mineral oil. Mineral oil (CAS#8042-47-4) is a liquid by-product of the distillation of petroleum. It is a transparent, colorless oil composed mainly of alkanes (typically 15 to 40 carbons) and cyclic paraffins. In other embodiments, the oil can be an aromatic hydrocarbon, such as naphthalene-based oil.

In other embodiments, the first and/or second hydrocarbon the first and/or second hydrocarbons has a (number, weight, or viscosity) average molecular weight of 750-10,000 g/mole. In some embodiments, the number average molecular weight of at least 750, 800, 850, 900, 950, 1000, 1100, or 1200 g/mole. The number average molecular weight is typically no greater than 10,000; 9,000; 8,000; 7,000; 6,000 or 5,000 g/mole. In some embodiments, the number average molecular weight is no greater than 2500, 2000, or 1500 g/mole.

In some embodiments, the first and/or second hydrocarbon is an aliphatic hydrocarbon comprising a mixture of various chain length of alkanes. In this embodiment, the aromatic moieties are typically less than 5, 4, 3, 2, or 1 wt.% of the hydrocarbon. In typical embodiments, the second hydrocarbon comprises little or no unsaturated moieties. For example, the unsaturated moieties are less than 5, 4, 3, 2, or 1 wt.% of the hydrocarbon.

One illustrative higher molecular weight hydrocarbon is petrolatum. Petrolatum (CAS# 8009-03-8) is a semi-solid mixture of hydrocarbons (with carbon numbers mainly higher than 25). In this embodiment, the (e.g. petrolatum) hydrocarbon is a semi-solid at room temperature, having a melting point greater than 25°C. In some embodiments, the melting point is at least 30 or 35°C. In some embodiments, the melting point is no greater than 60°C.

Petrolatum differs from mineral oil in that it has a broader molecular weight distribution including a higher amount of alkanes having a molecular weight ranging from 1,000 g/mole to 5,000 g/mole. In some embodiments, the petrolatum comprises alkane having a molecular weight of at least 2,000 or 3,000 g/mole.

In other embodiments, the first and/or second hydrocarbon the first and/or second hydrocarbons has a (number, weight, or viscosity) average molecular weight of 10,000 to 30,000 g/mole. One illustrative higher molecular weight hydrocarbon is polybutene. Polybutene having a (number, weight, or viscosity) average molecular weight of 750-10,000 g/mole is also commercially available.

In some embodiments, the first and/or second hydrocarbon has a polydispersity of at least 1.2, 1.25, 1.3, or 1.35. In some embodiments, the polydispersity is no greater than 1.5.

The molecular weight of the hydrocarbon can be measured by gel permeation chromatography according to ASTM D6579-11 using polystyrene molecular weight standards and tetrahydrofuran as the eluent.

In some embodiments, the second hydrocarbon has a viscosity at 25°C of at least 10 Pa sec at a shear rate of 1 1/sec. In some embodiments, the hydrocarbon has a viscosity at 25°C of at least 15, 20, 25, 30, 35, 40, 45, 50, 55, 60, 65, 70, or 75 Pa sec at a shear rate of 1 1/sec. When the shear rate is less than 1 1/sec (e.g. 0.9, 0.8, 0.7, 0.6, 0.5, 0.4, 0.3, 0.2, 0.1) the viscosity of the hydrocarbon can be at least 75, 100, 125, 150, or 175 Pa sec at a shear rate of 1 1/sec. The hydrocarbon typically has a viscosity at 25°C no greater than 200,000 Pa·sec at a shear rate of 1 1/sec. In some embodiments, the hydrocarbon has a viscosity at 25°C no greater than 150,000 or 100,000 Pa-sec at a shear rate of 1 1/sec. Higher viscosity at low shear rates is amenable to the hydrocarbon having a sufficiently high viscosity to prevent an epoxy curative or accelerator from settling out of the hydrocarbon while being stored in a container, such as a chamber of a cartridge for a dispensing and mixing apparatus.

The second hydrocarbon is typically shear thinning, meaning the viscosity is significantly higher at low shear rates, e.g. 1 1/sec, than at high shear rates, e.g. 10 1/sec or greater. The viscosity at higher shear rates is amenable to the hydrocarbon having a lower viscosity, e.g. more similar to the cyclin olefin composition, when the hydrocarbon is subjected to higher shear forces, such as passing through a mixer nozzle typically comprising a static mixing element. In some embodiments, the hydrocarbon has a viscosity at 25°C of at least 15, 20, 25, 30, 35, or 40 Pa sec at a shear rate of 10 1/sec. The hydrocarbon typically has a viscosity at 25°C no greater than 100,000 Pa sec at a shear rate of 10 1/sec. In some embodiments, the hydrocarbon has a viscosity at 25°C no greater than 75,000 or 50,000 Pa sec at a shear rate of 10 1/sec.

The viscosity of the hydrocarbon at 1 1/sec divided by the viscosity at 10 1/sec is one way to express the shear thinning behavior of the hydrocarbon. In some embodiments, the viscosity of the hydrocarbon at 1 1/sec divided by the viscosity at 10 1/sec is at least 1.5, 2, 2.5, 3, or 3.5. In some embodiments, the viscosity of the hydrocarbon at 1 1/sec divided by the viscosity at 10 1/sec is no greater than 10, 9, 8, 7, 6, 5, 4, 3, or 1.

The viscosity of the hydrocarbon can be measured on a rheometer using the method described in WO2021/202485; incorporated herein by reference.

The first and/or second hydrocarbon may comprise a single material or a mixture of materials. In one embodiment, the first and/or second hydrocarbon may be a mixture of a higher viscosity hydrocarbon (e.g. petrolatum or polybutene) with a low viscosity hydrocarbon, such as mineral oil. The low viscosity hydrocarbon typically has a viscosity at least 5-10 times lower than the higher viscosity hydrocarbon at 25°C a shear rate of 1 1/sec. When the shear rate is less than 1 1/sec (e.g. 0.9, 0.8, 0.7, 0.6, 0.5, 0.4, 0.3, 0.2, 0.1) the viscosity of the low viscosity hydrocarbon is typically less than 75, 50, 25, 20, 15, 10 or 5 Pa sec at a shear rate of 1 1/sec.

In this embodiment, the amount by weight of higher viscosity hydrocarbon (e.g. petrolatum or polybutene) is typically greater than or equal to the amount of low viscosity hydrocarbon (e.g. mineral oil). The weight ratio of higher viscosity hydrocarbon (e.g. petrolatum or polybutene) to low viscosity hydrocarbon (e.g. mineral oil) is 1:1 or greater. In some embodiments, the weight ratio of higher viscosity hydrocarbon to low viscosity hydrocarbon is no greater than 20:1. In some embodiments, the weight ratio of higher viscosity hydrocarbon to low viscosity hydrocarbon (e.g. mineral oil) is at least 1.2:1, 1.5:1, 2:1, 3:1, 4:1, 5:1, 6:1, 7:1, 8:1, 9:1, or 10:1.

The amount of second hydrocarbon(s) is typically at least 0.1, 0.2, 0.3, 0.4, 0.5, 0.6, 0.7, 0.8, 0.9, or 1 wt.% based on the total organic components of the (e.g. unfilled) epoxy resin composition. In the case of adhesive compositions, the amount of second hydrocarbon(s) is typically no greater than 20, 15, or 10 wt.% based on the total organic components of the (e.g. unfilled) epoxy resin composition. In some embodiments, the amount of second hydrocarbon(s) is no greater 9, 8, 7, 6, 5, 4, 3, 2, or 1 wt.%
based on the total organic components of the (e.g. unfilled) epoxy resin composition. Typically, the minimum amount of second hydrocarbons(s) that provide the desired increased in adhesion. When the amount of second hydrocarbon(s) is too high, other properties, such as overlap shear and/or WIP at 23°C, may decrease.

However, in the case of sealants, the composition may comprise up to 25, 30, 35, 40, 45, or 50% by volume of unreactive (e.g. hydrocarbon) hydrocarbon, based on the total amount of the (e.g. unfilled) epoxy resin composition. When present at higher concentrations, the second hydrocarbon may also be characterized as a plasticizer.

In some embodiments, the epoxy resin composition further comprises an anti-corrosion compounds (also known as corrosion inhibitors, i.e. a chemical compound that decreases the corrosion rate of a material, typically a metal or an alloy. In some embodiments, the first and/or second hydrocarbon comprises an anti-corrosion agent. Corrosion inhibitors are known and often classified by their chemical functionality. Inorganic inhibitors are typically crystalline salts of alkali, alkali earth, or transition metals such as (e.g. sodium) chromates, phosphates (orthophosphates, polyphosphates), molybdate; zinc compounds, including zinc oxide, as well as silicates, titanates, and ferrites. Organic anionic inhibitors include for example sodium sulfonates, phosphonates, or mercaptobenzotriazole(MBT). In some embodiments, the anti-corrosion agent comprises a sodium and/or calcium (e.g. sulphonate) salts.

### Epoxy curative

The epoxy resin further comprises one or more curatives. Common classes of curatives for epoxy resins include amines, amides, ureas, imidazoles, and thiols. The curing agent is typically highly reactive with the epoxide groups at ambient temperature.

In some embodiments, the curing agent in an amine curing agent that comprises reactive -NH groups or reactive -NR₁R₂ groups wherein R₁ and R₂ are independently H or C₁ to C₄ alkyl, and most typically H or methyl.

One class of curing agents are primary, secondary, and tertiary polyamines. The polyamine curing agent may be straight-chain, branched, or cyclic. In some favored embodiments, the polyamine crosslinker is aliphatic. Alternatively, aromatic polyamines can be utilized.

Useful polyamines are of the general formula R₅-(NR₁R₂)ₓ wherein R₁ and R₂ are independently H or alkyl, R₅ is a polyvalent alkylene or arylene, and x is at least two. The alkyl groups of R₁ and R₂ are typically C₁ to C₁₈ alkyl, more typically C₁ to C₄ alkyl, and most typically methyl. R₁ and R₂ may be taken together to form a cyclic amine. In some embodiment x is two (i.e. diamine). In other embodiments, x is 3 (i.e. triamine). In yet other embodiments, x is 4.

Useful diamines may be represented by the general formula: 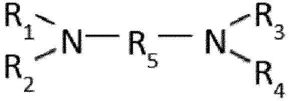 wherein R₁, R₂, R₃ and R₄ are independently H or alkyl, and R₅ is a divalent alkylene or arylene. In some embodiments, R₁, R₂, R₃ and R₄ are each H and the diamine is a primary amine. In other embodiments, R₁ and R₄ are each H and R₂, and R₄ are each independently alkyl; and the diamine is a secondary amine. In yet other embodiments, R₁, R₂, R₃ and R₄ are independently alkyl and the diamine is a tertiary amine.

In some embodiments, primary amines are preferred. Examples include hexamethylene diamine; 1,10-diaminodecane; 1,12-diaminododecane; 2-(4-aminophenyl)ethylamine; isophorone diamine; norbornane diamine 4,4'-diaminodicyclohexylmethane; and 1,3-bis(aminomethyl)cyclohexane. Illustrative six member ring diamines include for example piperazine and 1,4-diazabicyclo[2.2.2]octane ("DABCO").

Other useful polyamines include polyamines having at least three amino groups, wherein the three amino groups are primary, secondary, or a combination thereof. Examples include 3,3'-diaminobenzidine and hexamethylene triamine.

Common curing agents used to cure cycloaliphatic epoxy resin include anhydrides derived from a carboxylic acid which possesses at least one anhydride group. Such anhydride curing agents are described in US 6,194,024; incorporated herein by reference.

In some embodiments, the epoxy resin curative is a dicyanamide compound.

Dicyandiamide (DICY or DCD), also known as cyanoguanidine, is the dimer for cyanamide or for cyanoguanidine. Dicyandiamide is white crystalline powder with the molecular formula of C₂H₄N₄ and CAS number 461-58-5. A dicyandiamide can be represented by the following formula: 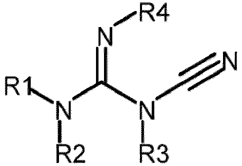 wherein one or more of R1, R2, R3, and R4 are hydrogen and optionally at least one of R1, R2, R3, and R4 is alkyl (e.g. C1-C12), aryl (e.g. phenyl), (e.g. C1-C12)alkylaryl, or (e.g. C1-C12)arylalkyl.

When one or more of R1, R2, R3, and R4 are hydrogen, the dicyandiamide structure has a positive charge. In typical, embodiments, R1 and/or R2 are hydrogen. In some embodiments, R1, R2, R3, and R4 are hydrogen. In other embodiments, R1, R3, and R4 are hydrogen and R2 is alkyl (e.g. C1-C12), aryl (e.g. phenyl), (e.g. C1-C12)alkylaryl, or (e.g. C1-C12)arylalkyl.

Examples of substituted dicyandiamides include for example N-cyano-N'-methylguanidine, 1,3-dimethyl-2-cyanoguanidine, N'-cyano-N,N-dimethylguanidine, N-cyano-N'-ethylguanidine, N-cyano-N'-ethyl-N"-methylguanidine, N-cyano-N'-phenylguanidine, N-cyano-N'-cyclopropylguanidine, N-cyano-N'-cyclohexylguanidine.

In some embodiments, the epoxy resin curative comprises a dicyandiamide cation and an anion selected from sulfonate or phosphonate, as described in US patent application serial no. 63/315,160, filed March 1, 2022. Such epoxy resin curatives are typically prepared by reacting dicyandiamide with an acid such as sulfonic acid or phosphonic acid.

Suitable acids are represented by the formulas:

**R[SO₃]ₙH**

**R[PO₃]ₙH₂**

wherein n is 1 or 2; and
R is an aliphatic or aromatic organic group.

Typical aliphatic organic groups include alkyl optionally comprising heteroatoms such as oxygen or nitrogen. The aliphatic (e.g. alkyl) organic groups typically comprise 1 to 18 carbon atoms. In some embodiments, the aliphatic (e.g. alkyl) organic groups comprise no greater than 12 carbon atoms. In other embodiments, the aliphatic (e.g. alkyl) organic groups comprise no greater than 6 or 4 carbon atoms.

In some embodiments, R is a C1, C2, C3, or C4 alkyl group optionally substituted with halogen (e.g. F) or hydroxy.

In other embodiments, R is an amine group (e.g. NH₂) or a C₁-C₄ alkyl amine.

Typical aromatic organic groups include benzyl, toluene, phenyl, diphenyl, and naphthyl optionally substituted for example with C₁-C₄ alkyl (e.g. methyl), halogen, or nitrogen. In some embodiments, the aromatic organic group further comprises an alkylene group or in other words is an alkylaryl group such as in the case of alkylbenzene sulfonic acids. The aromatic organic groups typically comprise 6 to 18 carbon atoms. The alkylene group of the alkylaryl group may comprise 1 to 18 carbon atoms (e.g. ethylene)

Some representative acids are described in the following Table A.

**Table A - Acids**

| | |
|---|---|
| TSA | 4-Methylbenzene-1-sulfonic acid monohydrate, *p*-Toluenesulfonic acid monohydrate, obtained from Sigma Aldrich, St. Louis, MO, USA |
| | 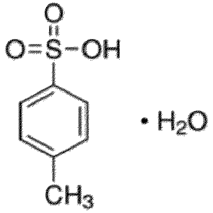 |
| MSA | Methylsulfonic acid, obtained from Sigma Aldrich, St. Louis, MO, USA |
| | 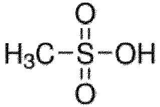 |
| BSA | Benzenesulfonic acid monohydrate, obtained from Sigma Aldrich |
| | 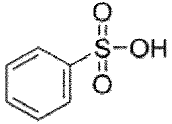 |
| TAU | Taurine, 2-Aminoethane-1-sulfonic acid, obtained from Sigma Aldrich |
| | 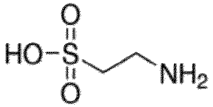 |
| ASA | Sulfamic acid, aminosulfonic acid, obtained from Sigma Aldrich |
| | 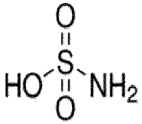 |
| MPA | Methylphosphonic acid, obtained from Sigma Aldrich |
| | 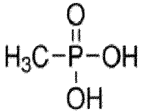 |
| BPA | Benzenephosphonic acid, obtained from Sigma Aldrich |
| | 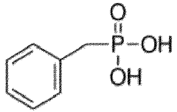 |

Other suitable aliphatic sulfonic acids include for example trifluoromethane sulfonic acid, ethane sulfonic acid, propane sulfonic acid, 3-hydroxy propane sulfonic acid.

Other suitable aromatic sulfonic acids include for example benzenedisulfonic acid, o- and p-toluenesulfonic acid, toluene disulfonic acid, C₂ -C₁₈ alkylbenzenesulfonic acids, naphthylenesulfonic acid, and C₁-C₁₈ alkylnaphthalenedisulfonic acids.

Other suitable aliphatic phosphonic acids include for example ethane phosphonic acid, propane phosphonic acid, octyl phosphonic acid, decyl phosphonic acid, hexadecyl phosphonic acid, 3-amine propane phosphonic acid.

Other suitable aromatic phosphonic acids include for example phenyl phosphonic acid, 4-bromophenyl phosphonic acid, 4-chlorophenyl phosphonic acid, 4-nitrophenyl phosphonic acid, diphenyl-4-phosphonic acid.

In some embodiments, the dicyandiamide salt is utilized as an accelerator in combination with at least one other (i.e. different) epoxy resin curing agent. In some embodiments, the other epoxy curing agent may be dicyandiamide. Various other curing accelerators are known in the art. The concentration of epoxy curing agent(s) is typically less than about 3, 2.5, 2, 1.5 or 1 wt.- %, based on the weight of the total epoxy resin composition. In some embodiments, the amount of curing agent is at least 0.005, 0.01, 0.025, 0.05, 0.1, 0.2, 0.3, 0.4, or 0.5 wt.-%.

In some embodiment, the composition has an onset temperature of an exotherm as measured by Differential Scanning Calorimetry of less than 180, 175, 170, 165, 160, 155, 150, or 145°C. In some embodiments, the composition has a peak temperature of an exotherm as measured by Differential Scanning Calorimetry of less than 190, 185, 180, or 170°C.

The second hydrocarbon is "unreactive", meaning it is unreactive with the epoxy resin, epoxy curative and optional other reactive components (e.g. accelerator) when present. When the hydrocarbon is sufficiently unreactive, the Differential Scanning Calorimetry onset temperature of the reaction of the unpolymerized cyclic olefin and dispersed catalyst is substantially the same after storage (e.g. 3 months at 25°C) as compared to the same composition not subject to storage. The change in the onset temperature is typically less than 10, 9, 8, 7, 6, 5, 4, 3, 2, 1, or zero.

### Toughening agent

In some embodiments, the epoxy resin composition may comprise a toughening agent, also known as impact modifiers.

Toughening agents are typically low Tg materials, having a Tg less than 0, -5 , -10, -15, or -20°C (as determined by Differential Scanning Calorimetry). In some embodiments, the toughening agents has a Tg of at least -75, -70, -65, -60, -55, or -50°C.

In some embodiments, the toughening agent may be characterized as toughening agent particles. Suitable toughening agent particles include for example core-shell toughening agents, CTBNs (carboxyl and/or nitrile terminated butadiene/nitrile rubbers) and high molecular weight amine terminated polytetramethylene oxide, and any combinations and mixtures thereof. Core-shell impact modifier typically comprise different materials in the inner core region than the outer shell region. In typical embodiments, the core material may be harder than the shell material. The shell may comprise harder material and/or the shell may be layered in its construction. The inner core may comprise a single and/or a plurality of organic polymers and inorganic oxides from the first, second and/or third transition series of the periodic table such as silica, alumina, zirconia, and/or naturally occurring minerals such as feldspars, silicates, aluminates, zirconates, and/or other hardened materials such as carbides, nitrides, silicides, aluminides, and/or some combination thereof and therebetween. The outer soft shell component may comprise rubber such as diene, olefin rubbers, natural rubber, polyisoprene, copolymers thereof, ethylene propylene monomer rubber, diene-acrylonitrile copolymers, copolymers of vinyl aromatic monomers, styrene-butadiene copolymers known as SBR rubbers, and terpolymers of dienes with acrylonitrile or unsaturated esters and styrene or vinyl toluene. The soft shell preferably includes functional groups such as carboxyl, hydroxyl, epoxy, cyanates, isocyanates, amino, and thiol which can react with the epoxy components of the precursor.

Core-shell impact modifiers are commercially available, for example, from Rohm and Hass under the trade designation Paraloid^{™}. CTBN toughening agents react through their carboxyl and/or nitrile functional groups with the epoxide component of the precursor during curing thereby introducing their butadiene/nitrile rubber portion as a soft, shock-absorbing segment into the epoxy network forming a hard segment. CTBN toughening agents/impact modifiers are commercially available, for example, from Hanse Chemie AG, Hamburg, Germany, under the trade designation Albipox^{™}. Similarly, a high molecular weight amine terminated polytetramethylene oxide is commercially available, for example, from 3M Company, St. Paul/MN, USA, under the trade designation "3M EPX^{™} Rubber".

The amount of (e.g. core-shell) toughening agent particles is typically at least 10, 15, 20, 25, 30 or 35 wt.% of the total epoxy resin composition. In some embodiments, the amount of (e.g. core-shell) toughening agent particles is at least 40, 45, 50, 55, or 60 wt.% of the total epoxy resin composition. In some embodiments, the amount of (e.g. core-shell) toughener is no greater than 70, 65, 60, 55, 50, 45, or 40 wt.% of the total epoxy resin composition.

In some embodiments, the (e.g. core-shell) toughening agent particles have a particle size of less than 1 micron, 500 nanometer, or 250 microns.

In some embodiments, the composition comprises a combination of two or more toughening agents that differ in at least one property. In some embodiments, the composition comprises up to 10 wt.% of toughening agent particles having a (e.g. average) particle size of greater than 1, 5, 10, 15, or 20 microns and toughening agent particles having a (e.g. average) particle size of less than 1 micron. The particle size of core-shell toughening agents (e.g. MX types) is described on the supplier data sheets. Particle size can also be determined using a (e.g. Thermo Scientific^{™} Phenom^{™} desktop) scanning electron microscope (SEM) and (e.g. Thermo Scientific Phenom ParticleMetric) software to determine the mean particle size (d50). The circle equivalent diameter can be used as a parameter for measuring the particle size. Typically less than 50 particles are measured in one SEM image to determine the mean particle size.

In some embodiments, the (e.g. smaller) toughening agent may have an average particle size (D50) of at least 50, 75, or 100 nanometers. In some embodiments, the (e.g. smaller) toughening agent may have an average particle size of at least 150 or 200 nanometer. In some embodiments, the (e.g. smaller) toughening agent may have an average particle size no greater than 750 or 500 microns. In some embodiments, the (e.g. smaller) toughening agent may comprise particles ranging in size from 50 to 500 nanometers. The (e.g. smaller) toughening agent may comprise a mixture of first particles having a D50 of ranging from 50 to 150 nm (e.g. 100 nm) and second particles having a D50 ranging from greater than 150 nm to 300 nm (e.g. 200 nm). In some embodiments, the composition comprises at least 25, 30, 35, 40, 45, 50, 55, 60, or 65 wt.% of a (e.g. smaller) toughening agent. In some embodiments, the composition comprises no greater than 75, 70, 65, 60, 55, or 50 wt.% of a (e.g. smaller) toughening agent. In some embodiments, the (e.g. smaller) toughening agent has a glass transition temperature (Tg) of at least -40, -35, -30, -25, or -20°C. The (e.g. smaller) toughening agent may have a Tg no greater than -10, -15, or -20°C. In some embodiments, the (e.g. smaller) toughening agent comprises a core shell toughening agent comprising a polybutadiene core.

The (e.g. larger) toughening agent may have an average particle size (D50) of at least 5, 10, 15, 20, 25, 30, or 35 microns. In some embodiments, the (e.g. larger) toughening agent may have an average particle size of no greater than 100, 75, or 50 microns. In some embodiments, the composition comprises at least 3, 4, 5, 6, 7, 8, 9, or 10 wt.% of a (e.g. larger) toughening agent. In some embodiments, the composition comprises no greater than 20, 15, or 10 wt.% of a (e.g. larger) toughening agent. In some embodiments, the (e.g. larger) toughening agent has a glass transition temperature (Tg) less than -40, -45, or -50°C. The (e.g. larger) toughening agent may have a Tg of at least -75, -70, -65, -60, -55, or -50°C. In some embodiments, the (e.g. larger) toughening agent comprises a methylmethacrylate/
butadiene/styrene copolymer.

### Other Components of the Epoxy Resin Composition

The epoxy resin composition may optionally further comprise various additives such as fillers, UV stabilizers, plasticizers (e.g. polybutene, petrolatum, oil) tackifiers, flow control agents, cure rate retarders, adhesion promoters, colorants (e.g. carbon black), (e.g. inorganic) fillers such as (e.g. fumed) silica, (e.g. phlogopite) mica, glass and ceramic microspheres; as well as (e.g. polyethylene) polymeric and inorganic fibers. In some embodiments, the amount of additive(s) is no greater than 5, 4, 3, 2, or 1 wt.% of the total epoxy composition.

In typical embodiments, the desired viscosity of the hydrocarbon is obtained using little or no thixotropic fillers such as silica that typical generate heat during mixing. Thus, the (e.g. adhesive) composition typically comprises no greater than 5, 4, 3, 2, or 1 wt.% of thixotropic fillers.

The epoxy resin composition is typically 100% solids, comprising little or no volatile organic solvent e.g. less than 5, 4, 3, 2, or 1 wt.% volatile organic solvent.

The (e.g. adhesive) epoxy resin composition can be coated on a substrate using conventional coating techniques. For example, these compositions can be applied to a variety of substrates by methods such as roller coating, flow coating, dip coating, spin coating, spray coating, knife coating, and die coating. Coating (dry) thickness typically ranges from 25 (e.g. about 1 mil) to 1500 microns (60 mils). In some embodiments, the coating thickness ranges from about 50 to 350 microns.

The epoxy resin composition can be a one-part or two-part (e.g. adhesive) epoxy resin compositions.

The two-part (e.g. adhesive) epoxy resin compositions described herein can be utilized with cartridges as well as dispensing and mixing apparatus that are currently used for two-part epoxy compositions such as depicted and described in WO2021/202485. In one embodiments, a two-part composition is described comprising a first part (provided in a first chamber of a cartridge) comprising an epoxy resin composition and optionally other components (e.g. adhesion promoters, additives) and a second part (provided in a second chamber of a cartridge) comprising a curing agent. Either part may comprise the second hydrocarbon. In some embodiments, the second hydrocarbon is a dispersant for the curing agent. The first chamber and second chamber typically have a volume ranging from 1:1 to 20:1. In some embodiments, the first chamber and second chamber have a volume ratio of at least 2:1, 3:1, or 4:1. In some embodiments, the first chamber and second chamber have a volume ratio less than 20:1 such as 15:1 or 10:1. During use, the contents of the first and second chamber is conveyed through a dispensing nozzle containing the static mixer element, such that the mixed components of the first and second chamber exit the outlet of the nozzle tip.

In typical embodiments, curing of the epoxy resin occurs after applying the (e.g. adhesive) composition to a substrate.

The (e.g. adhesive) composition may be coated upon a variety of substrates. However, the method and composition described herein are particularly advantageous for bonding to substrates having an oily surface. Metal substrates are often coated with an oil to prevent corrosion. Even though the oil is typically cleaned off prior to boding the metal substrates, it is common that at least some of the oil remains on the substrate surface. The presence of oil on the substrate surface can reduce overlap shear and/or adhesion.

In some embodiments, the substrate or substrate surface comprises metal such as steel, aluminum, copper, and metalized polymer films.

The adhesive composition is typically not a pressure sensitive adhesive after curing the epoxy resin. In this embodiment, the storage modulus (G') of the adhesive after curing is at least (e.g. 25°C) 3 × 10⁵ Pa at a frequency of 1 Hz. In some embodiments, the adhesive composition has a storage modulus of a least than 4 × 10⁵ Pa, 5 × 10⁵ Pa, 6 × 10⁵ Pa, 7 × 10⁵ Pa, 8 × 10⁵ Pa, 9 × 10⁵ Pa, 1 × 10⁶ Pa, 2 × 10⁶ Pa, 3 × 10⁶ Pa, 4 × 10⁶ Pa, 5 × 10⁶ Pa or greater after curing. In this embodiment, the adhesive composition may be characterized as a semi-structural or structural adhesive composition.

"Semi-structural adhesives" are those cured adhesives that have an overlap shear strength (according to the test method of the examples) of at least about 0.5, 1 or 1.5 MPa "Structural adhesives" are those cured adhesives that have an overlap shear strength of at least about 5, 10 or 15 MPa. In some embodiments, the overlap shear strength is no greater than about 25 MPa. The epoxy adhesive composition typically has substantially the same overlap shear strength (i.e. +/- 10% of the average values) as compared to the same adhesive composition without the (e.g. second) hydrocarbon.

The epoxy adhesive composition typically has a greater T-peel adhesion as compared to the same adhesive composition without the (e.g. second) hydrocarbon. In some embodiments, the increase in T-peel adhesion is at least 25, 50, 75, 100, 150, or 200 Newtons. In some embodiments, the T-peel adhesion can be at least 150, 200, 250, 300, or 350 Newtons.

The epoxy adhesive composition typically has substantially the same wedge impact peel (WIP) at 23°C (i.e. +/- 10% of the average values) as compared to the same adhesive composition without the (e.g. second) hydrocarbon. The epoxy adhesive composition may have a greater WIP as compared to the same adhesive composition without the (e.g. second) hydrocarbon. In some embodiments, the increase in WIP is at least 5, 6, 7, 8, 9, or 10 N/mm. In some embodiments, the wedge impact peel (WIP) is at least 5, 10, 15, 20, 25, 30, 35, 40 or 45 at 23°C or 30°C.

The overlap shear strength, T-peel, and WIP can be tested according to the test method described in the examples.

### EXAMPLES

Unless otherwise noted or readily apparent from the context, all parts, percentages, ratios, etc. in the Examples and the rest of the specification are by weight.

**Table 1. Materials used in the Examples and their manufacturers**

| Abbreviation | Material Description and Source |
|---|---|
| 1001F | A low molecular weight solid epoxy resin derived from a liquid epoxy resin and bisphenol-A, obtained under the trade designation "EPON 1001F" from Hexion Specialty Chemicals, Columbus, OH, USA |
| 828 | A medium viscosity liquid epoxy resin produced from bisphenol A resin and epichlorohydrin, obtained under the trade designation "EPIKOTE 828" from Hexion, Columbus, OH, USA |
| DDA 10 | A micronized grade of dicyandiamide, obtained under the trade designation "OMICURE DDA 10" from Huntsman Corporation, The Woodlands, TX, USA |
| RD 24 | Dodecyl and tetradecyl glycidyl ethers, obtained as product "ipox RD 24" from ipox chemicals, Laupheim, Germany |
| MX-257 | A core shell rubber in liquid epoxy resin based on bisphenol-A epoxy, obtained under the trade designation "KANE ACE MX-257" from Kaneka, Westerlo, Belgium having a polybutadiene polymer core, a D50 particle size of 200 nm, and a Tg between -40°C and -20°C |
| MX-153 | A core shell rubber in liquid epoxy resin based on Bisphenol-A, obtained under the trade designation "KANE ACE MX-153" from Kaneka, Westerlo, Belgium having a polybutadiene polymer core, a D50 particle size of 100 nm, and a Tg between -40°C and -20°C |
| B-564 | A methylmethacrylate/butadine/styrene copolymer, obtained under the trade designation "KANE ACE B-564" from Kaneka, Westerlo, Belgium having a D50 particle size of 35 microns and a Tg of -50°C |
| Oil 1 | Corrosion prevention oil, obtained under the trade designation "ANTICORIT PL 3802-39 S" Fuchs Schmierstoffe GmbH, Mannheim, Germany (20-50% naphthenic based oil containing <1% phenolic antioxidant, < 5% sodium sulfonate and < 3% calcium sulfonates) |
| Oil 2 | Petroleum, C15-30, hydrotreated neutral oil-based, Finish Line Technologies, Hauppauge, NY, USA |
| Oil 3 | Petrolatum, Sigma, Germany |
| Oil 4 | Butadiene liquid rubber, L-BR 305, MW = 26,000 g/mol, Kuraray Europe, Troisdorf, Germany |

### Test Methods

### Overlap Shear Strength (OLS) according to DIN EN 1465

The surfaces of the OLS metal sheets (steel, grade DX54+ZMB obtained by Rocholl GmbH, Germany) were cleaned with methyl ethyl ketone to remove any processing fluids. Afterwards, ANTICORIT PL 3802-39 S was applied dropwise on the freshly cleaned and dry surfaces (3 g/m²) and the oil evenly distributed by hand and glove to achieve a fully oil covered surface on the metal sheet. The metal sheets are left at ambient room temperature (23 °C +/- 2 °C, 50% relative humidity +/-5%) for 24 hours prior to testing and the OLS strength is measured as described below.

Overlap shear strength was determined according to DIN EN 1465 using a Zwick Z050 tensile tester (commercially available by Zwick GmbH & Co. KG, Ulm, Germany) operating at a cross head speed of 10 mm/min. For the preparation of an Overlap Shear Strength test assembly, a curable composition is placed onto one surface of a prepared metal sheet. Afterwards, the sample was covered by a second metal sheet forming an overlap joint of 10 mm. The overlap joints are then clamped together using two binder clips and the test assemblies are further stored at room temperature for at least 2 hours after bonding, and then placed into an air circulating oven from Heraeus (Heraeus Deutschland GmbH & Co. KG, Germany) for 30 minutes at 180 °C. The next day, the samples are tested directly. Three samples are measured for each of the examples and results averaged and reported in MPa.

### T-Peel Strength Measurements according to DIN EN 1464

T-peel specimens were made using steel panels measuring 25x150 mm. The surface of the T-peel metal sheets (steel, grade DX54+ZMB, 0.8 mm thickness, obtained from Rocholl GmbH, Germany) were cleaned with methyl ethyl ketone. Afterwards, ANTICORIT PL 3802-39 S was applied dropwise on the freshly cleaned and dry surfaces (3 g/m²) and the oil evenly distributed by hand and glove to achieve a fully oil covered surface on the T-peel metal sheets. The metal sheets are left at ambient room temperature (23 °C +/-2 °C, 50% relative humidity +/-5%) for 24 hours prior to testing and the T-peel force is measured as described below.

T-peel force was determined according to DIN EN 1464 using a Zwick Z050 tensile tester (commercially available by Zwick GmbH & Co. KG, Ulm, Germany) operating at a cross head speed of 100 mm/min. For the preparation of a T-peel test assembly, a curable composition is placed onto one surface of a prepared metal sheet and a sprinkle of glass beads (0.30 mm diameter) are placed on the curable composition to ensure a thickness of 0.30 mm of the curable composition layer during the curing process. Afterwards, the sample was covered by a second metal sheet forming an overlay of two metal sheets with 25x100x0.3 mm adhesive layer in between. The t-peel joints are then clamped together using six binder clips and the test assemblies are further stored at room temperature for at least 2 hours after bonding, and then placed into an air circulating oven from Heraeus (Heraeus Deutschland GmbH & Co. KG, Germany) (curing duration and temperatures to be taken from example sections). The next day, the samples are tested directly. Three samples are measured for each of the examples and results averaged and reported in N.

### Wedge impact peel according to ISO 11343

Substrates for impact peel strength testing are galvanized cold 5 rolled steel (obtained from Rocholl GmbH, Germany). The surfaces of the wedge impact peel metal sheets (steel, grade DX54+ZMB obtained by Rocholl GmbH, Germany) were cleaned with methyl ethyl ketone to remove any processing fluids. Afterwards, ANTICORIT PL 3802-39 S was applied dropwise on the freshly cleaned and dry surfaces (3 g/m²) and the oil evenly distributed by hand and glove to achieve a fully oil covered surface on the metal sheet.

For impact peel strength testing, specimens are prepared and tested in accordance with ISO 11343, using a bonding area of 30×20 mm, an adhesive layer thickness of 0.3 mm and a test speed of 2 m/s. Curing conditions were set to 30 minutes at 180 °C. Cured test specimens were stored at 23°C +/-2 °C, 50% relative humidity +/-5%, for 24 hours prior to testing. Wedge impact peel values are reported in N/mm.

**Table 2. Base Structural Adhesive Composition**

| Raw material abbreviation | Weight % |
|---|---|
| 1001F | 9.53 |
| RD24 | 7.94 |
| MX-257 | 31.78 |
| MX-153 | 31.78 |
| B-564 | 7.94 |
| 828 | 6.35 |
| DDA 10 | 3.62 |
| **Total** | 100.00 |

### Examples

30 g of the base structural adhesive composition (Table 2) was weighed into a 150 mL speedmixer cup (Hauschild & Co KG, Germany). The corresponding amount of oil (Table 3) was added to the base adhesive and the content speedmixed for at least 1 min at 3500 rpm. The example formulations were finalized by this last step. With the resulting formulations (examples 1-6) test specimens were prepared (see test methods).

**Table 3. Formulations for Examples**

| Examples | Base adhesive / g | Oil 1 / g | Oil 2 / g | Oil 3 / g | Oil 4 / g |
|---|---|---|---|---|---|
| CE-A | 30 | - | - | - | - |
| 1 | 30 | 0.25 | - | - | - |
| 2 | 30 | 0.5 | - | - | - |
| 3 | 30 | 1.0 | - | - | - |
| 4 | 30 | 5.0 | - | - | - |
| 5 | 30 | - | 0.25 | - | - |
| 6 | 30 | - | 0.5 | - | - |
| 7 | 30 | - | 1.0 | - | - |
| 8 | 30 | - | 5.0 | - | - |
| 9 | 30 | - | - | 0.25 | - |
| 10 | 30 | - | - | 0.5 | - |
| 11 | 30 | - | - | 1.0 | - |
| 12 | 30 | - | - | 5.0 | - |
| 13 | 30 | - | - | - | 0.25 |
| 14 | 30 | - | - | - | 0.5 |
| 15 | 30 | - | - | - | 1.0 |
| 16 | 30 | - | - | - | 5.0 |

**Table 2. Test Results**

| Examples | OLS (MPa) | T-Peel (N) | WIP at 23 °C (N/mm) | WIP at 30 °C (N/mm) |
|---|---|---|---|---|
| CE-A | 20.5 | 160 | 39.0 | 17.5 |
| 1 | 24.1 | 298 | 37.6 | 26.5 |
| 2 | 23.5 | 246 | 36.4 | 25.5 |
| 3 | 22.1 | 220 | 36.0 | 20.3 |
| 4 | 18.6 | 123 | 25.1 | 11.8 |
| 5 | 22.4 | 263 | 35.8 | 28.7 |
| 6 | 21.2 | 260 | 37.1 | 28.5 |
| 7 | 21.5 | 273 | 34.8 | 26.7 |
| 8 | 18.8 | 272 | 32.7 | 24.2 |
| 9 | 22.1 | 296 | 36.7 | 27.4 |
| 10 | 21.9 | 294 | 36.5 | 29.8 |
| 11 | 21.6 | 295 | 32.9 | 26.0 |
| 12 | 19.8 | 248 | 15.2 | 16.0 |
| 13 | 21.7 | 311 | 34.9 | 24.5 |
| 14 | 21.7 | 210 | 33.9 | 23.5 |
| 15 | 21.5 | 216 | 31.7 | 22.9 |
| 16 | 19.5 | 217 | 21.4 | 15.1 |

## Claims

1. A method of using an epoxy resin composition comprising:
providing a substrate comprising a first hydrocarbon on a surface of the substrate;
providing an epoxy resin composition on the surface of the substrate, wherein the composition comprises
i) an epoxy resin;
ii) an epoxy resin curative; and
iii) a second hydrocarbon; and
curing the epoxy resin composition.

2. The method of bonding wherein the first and second hydrocarbons are a liquid or semi-solid.

3. The method of claims 1-2 wherein the substrate comprises a metal including steel or copper.

4. The method of claims 1-3 wherein the first and/or second hydrocarbon are different or the same hydrocarbon materials.

5. The method of claim 1 wherein the epoxy resin composition is a sealant and the amount of second hydrocarbon is no greater than 50 wt.% based on the total organic components of the unfilled epoxy resin composition.

6. The method of claim 1 wherein the epoxy resin composition is an adhesive and the amount of second hydrocarbon is no greater than 20 wt.% based on the total organic components of the unfilled epoxy resin composition.

7. The method of claims 1-6 wherein the amount of second hydrocarbon is no greater than 10, 5 or 1 wt.% of the total organic components of the unfilled epoxy resin composition.

8. The method of claims 1-7 wherein the first and/or second hydrocarbon has a molecular weight of
i) 500-1500 g/mole; or
ii) 750-10,000 g/mole; or
iii) 10,000 - 30,000 g/mole.

9. The method of claims 1-8 wherein the first and/or second hydrocarbon further comprises an anti-corrosion agent inclusive of a sodium and/or calcium salt.

10. The method of claims 1-9 wherein the one or more epoxy resin curatives comprises amine groups including dicyandiamide and salts thereof.

11. The method of claims 1-10 wherein the method further comprises contacting the composition with a second substrate that comprises the same material or a different material than the first substrate.

12. The method of claims 1-11 wherein the composition is an adhesive having an overlap shear and/ or T-peel greater than the same composition without the second hydrocarbon.

13. An adhesive bonded article comprising a first and second substrate bonded with the epoxy resin composition of the previous claims.

14. A composition comprising:
i) an epoxy resin;
ii) an epoxy resin curative; and
iii) a hydrocarbon in an amount no greater than 10 wt.%, based on the total organic components of the unfilled epoxy resin composition.

15. The composition of claim 14 wherein the composition is further **characterized by** claims 1-4, 6-10, and 12.
